# EUROPÄISCHE PATENTSCHRIFT

(11) **EP 3 442 327 B1**
(45) Veröffentlichungstag und Bekanntmachung des Hinweises auf die Patenterteilung: **31.03.2021**
(21) Anmeldenummer: 17718820.8
(22) Anmeldetag: 31.03.2017
(51) Int. Cl.: A01J 25/15

(54) **VERFAHREN UND ANLAGE ZUR FORCIERTEN ABLEITUNG VON PRESSMOLKE AUS EINER KÄSEPRESSE**
METHO AND APPARATUS FOR THE FLUSHING OF WHEY FROM A CHEESE PRESS
PROCÉDÉ ET DISPOSITIF POUR RINCER LE PETIT-LAIT DANS UNE PRESSE

(30) Priorität: 14.04.2016 DE 102016004589
(43) Veröffentlichungstag der Anmeldung: 20.02.2019
(73) Patentinhaber: GEA TDS GmbH, 31157 Sarstedt (DE)
(72) Erfinder: LÖW, Joachim, 31141 Hildesheim (DE)
(74) Vertreter: Hauck Patentanwaltspartnerschaft mbB
(86) Internationale Anmeldenummer: PCT/EP2017/000397
(87) Internationale Veröffentlichungsnummer: WO 2017/178095

(56) Entgegenhaltungen:
- EP-A1- 0 923 856
- EP-A1- 2 421 355
- DE-C2- 3 414 474
- GB-A- 715 500

## Beschreibung

### TECHNISCHES GEBIET

Die Erfindung betrifft ein Verfahren zur forcierten Ableitung von Tropf- und/oder Pressmolke aus einer Käsepresse, die für das Pressen von Käse in einer Mehrzahl von Käseformen mit beweglichen Deckeln derart ausgerüstet ist, dass über die Deckel Druck auf den Käse ausübbar ist, wobei die Käseformen mindestens in einer Pressreihe angeordnet sind, die Käseformen über einen Eintritt in die jeweilige Pressreihe ein- und über einen Austritt aus der Pressreihe ausgebracht und von dem Eintritt zu dem Austritt intermittierend gefördert werden, wobei in der stationären Position der Käseformen in der Pressreihe das Pressen des Käses erfolgt und wobei die aus den Käseformen einer Pressreihe austretende Tropf- und/oder Pressmolke auf einer Bodenwand der Käsepresse aufgefangen und gesammelt, zu einem Ende der Pressreihe abgeleitet und anschließend aus der Käsepresse abgeführt wird, sowie eine Anlage, die zur Durchführung des Verfahrens geeignet ist. Unter Pressmolke wird nachfolgend hauptsächlich die während des Pressens des Käses aus den Käseformen austretende Molke verstanden. Unter Pressmolke soll nachfolgend, wenn keine weitere Differenzierung vorgenommen wird, aber auch sogenannte Tropfmolke subsummiert werden, die innerhalb der Käsepresse und außerhalb des temporären Pressvorganges aus den Käseformen austritt bzw. abtropft, insbesondere vor dem Pressvorgang im Zuge der Einbringung der Käse-formen in die Pressreihe.

### STAND DER TECHNIK

Molke, die bei der Herstellung von Käse, insbesondere Labkäse, anfällt, ist ein wertvoller Rohstoff zur Gewinnung bzw. Herstellung von weiteren Produkten. Die Qualität der Molke ist in diesem Zusammenhang besonders wichtig und zunehmend von Bedeutung und diese Qualität kann zum Einen durch mögliche Fremdinfektionen im Herstellungsprozess und zum Anderen durch die Dauer bzw. die Schnelligkeit der Verarbeitung der Molke beeinflusst werden. Denn erstens wurde die Milch zur Herstellung von Käse in der Regel mit Kulturen versetzt, die sich auch noch in der Molke befinden, und zweitens fällt Molke in einem Temperaturbereich an, der ein vermehrtes Wachstum von Mikroorganismen begünstigt. Hinzu kommt, dass sich in der Molke noch viele für Mikroorganismen gut verwertbare Inhaltsstoffe befinden, insbesondere Laktose, Proteine und zum Teil Fette. Je länger die Molke, durch prozessuale oder andere Umstände bedingt, benötigt, um in nachfolgenden Prozessen wie beispielsweise Klärung, Entrahmung, Erhitzung, Kühlung eine Weiterbehandlung zu erfahren, umso schlechter wird ihre Qualität. Aus einer unerwünscht langen Verweilzeit resultiert durch die Fermentation von Säurebildnern ein stetig sinkender pH-Wert der Molke. Mit dergestalt sinkender Qualität der Molke vermindert sich auch die Verwertbarkeit dieses Substrats bzw. die mögliche Wertschöpfung mit diesem Substrat.

In diesem Zusammenhang spielt die an Käsepressen anfallende Pressmolke eine besondere Rolle. Im Verhältnis zu den vorher im Käseherstellungsprozess angefallenen Molkemengen ist der quantitative Anteil der Pressmolke eher gering. Durch die langen Zeiten, die die Pressmolke vom Anfall an der Käsepresse bis zu den nachfolgenden Behandlungsprozessen unterwegs ist, kann ihre Qualität im Sinne der vorstehenden Ausführungen schlecht sein. Wird sie der Hauptmolke zugeführt, kann sie deren Qualität, ungeachtet ihres quantitativen Anteils an der Gesamtmenge, überproportional negativ beeinflussen.

Bei Käsepressen, wie sie beispielsweise aus der DE 26 09 097 C2 oder der DE 34 14 474 C2 bekannt sind, handelt es sich um langgestreckte, gemäß dem erstgenannten Dokument offene oder, gemäß dem zweitgenannten Dokument, geschlossene Konstruktionen mit zumindest einer ebenen oder fast ebenen Bodenwand mit meist geringer Neigung zu einem Ablauf. Eine derartige Käsepresse dient dem Pressen von Käse in einer Mehrzahl von Käseformen mit beweglichen Deckeln, über die mit von Druckzylindern betätigbaren Druckelementen Druck auf den Käse ausübbar ist. Dabei sind die Käseformen oberhalb der Bodenwand in mindestens einer Pressreihe angeordnet. Die Käseformen werden über einen Eintritt in die jeweilige Pressreihe ein- und über einen Austritt aus der Pressreihe ausgebracht und von dem Eintritt zu dem Austritt mittels eines Transportmittels intermittierend gefördert. Es können mehrere Pressreihen nebeneinander angeordnet sein und gleichzeitig oder nacheinander mit Käseformen beschickt werden. Ist der Beschickungsvorgang abgeschlossen, erfolgt in der stationären Position der Käseformen in der Pressreihe das Pressen des Käses über den jeweils zugeordneten Deckel, wobei eine aus den Käseformen einer Pressreihe austretende Pressmolke auf der Bodenwand aufgefangen und gesammelt, dort zu einem Ende der Pressreihe abgeleitet und anschließend über einen an diesem Ende der Pressreihe und an der Bodenwand angeordneten Abfuhranschluss aus der Käsepresse abgeführt wird.

In der DE 10 2006 020 226 A1 ist eine Füllanlage zur Käseherstellung beschrieben, die eine Wanne aufweist, die zur Aufnahme wenigstens einer mit Molke-Käsebruch-Gemisch zu befüllenden Form ausgebildet ist. Der wenigstens einen Form ist ein Abfüllrahmen zugeordnet, der für die Befüllung der zugehörigen Form mit einem unteren Abschnitt im Wesentlichen bis auf den Bodenbereich der Form in diese absenkbar ist. Über eine Reinigungseinrichtung kann zwischen den Chargen auch eine Spülflüssigkeit, beispielsweise Heißwasser, in die Füllanlage eingebracht werden, um Restmolke auszuspülen. Die Zufuhr der Spülflüssigkeit in die Füllanlage erfolgt dabei von oben über einen Reinigungsdeckel. Dazu muss die Füllanlage entleert werden. Das Abführen von Restmolke kann daher nicht im laufenden Betrieb erfolgen.

In der EP 0 923 856 A1 ist eine Vorrichtung zum Formen von Käserohlingen durch Pressen beschrieben, die als eine sich im Wesentlichen in Vertikalrichtung erstreckende geschlossene Mehretagenanordnung mit einer vorgegebenen Anzahl von separaten Etagen ausgebildet ist, wobei in jeder Etage ein Presstisch mit im wesentlichen horizontaler Ausrichtung angeordnet ist. Im Bereich jeder der in Vertikalrichtung aufeinanderfolgend angeordneten Etagen ist ein Tunnel gebildet. Darüber hinaus weist jede Etage eine CIP-Verrohrung mit Tankreinigungssprühköpfen oberhalb eines jeden Presstisches zur Ausbringung von Reinigungsmittel auf. Ferner kann jeder Presstisch einen Molkeablaufkanal sowie einen CIP-Rücklaufkanal aufweisen. Die Vorrichtung ermöglicht eine Außenreinigung der Pressformen sowie eine Innenreinigung der Presseinrichtung, die durch Molke- und Eiweißreste verkrustet oder verklebt sind, ohne dass die unmittelbar daneben angeordneten, mit Käserohlingen geladenen Presseinrichtungen einer Benetzung und Kontamination durch Reinigungsmittel ausgesetzt sind. Die Zufuhr des Reinigungsmittels in die jeweilige Etage erfolgt dabei von oben. Dazu muss die zu reinigende Etage entleert werden. Das Abführen von Tropf- und/oder Pressmolke kann daher nicht im laufenden Betrieb erfolgen.

Nach Ablauf der Presszeit, die, wie die Molkereifachliteratur ausweist, beispielsweise bei Edamerkäse bei 3 bis 4 Stunden und bei Emmentalerkäse bei ca. 20 Stunden liegt, werden die Käseformen über den dem Eintritt gegenüberliegenden Austritt aus der Pressreihe ausgebracht. Danach kann dann die erneute Beschickung der Pressreihe mit weiteren, mit noch zu pressendem Käse befüllten Käseformen erfolgen.

Der noch ungepresste Käse verliert auf seinem Weg zu der Käsepresse und im Zuge der Einbringung in die und im Zuge der Ausbringung aus der Käsepresse Molke, sogenannte Tropfmolke, wobei die Tropfmolke im Zuge der Einbringung mengenmäßig deutlich überwiegt. Im Verlauf des Pressvorganges fällt in der gesamten Pressreihe, und zwar an jeder stationär positionierten Käseform, weitere Molke, sogenannte Pressmolke, an. Der Anfall von sogenannter Tropfmolke nimmt, einerseits über die vorstehende Handhabungs- und Behandlungszeit und andererseits über die Pressreihe in Förderrichtung der Käseformen gesehen, deutlich ab. So wird die relativ größte Menge Tropfmolke in der Käsepresse im Bereich des Eintritts anfallen, während der geringste Anfall von Tropfmolke im Bereich des Austritts vorliegt. Der Anfall der Pressmolke nimmt mit fortschreitender Presszeit stetig ab. Die Tropf- und Pressmolke, die aus den Käseformen austritt, gelangt bei den meisten Bauformen der Käsepressen auf deren Bodenwände, von wo sie meist über dort ausgebildete längsführende Sammelrinnen zu einer Seite der Pressreihe abgeleitet und anschließend aus der Käsepresse abgeführt wird.

Durch den im Mittel relativ geringen Anfall an insbesondere Pressmolke und das geringe Gefälle im Bereich ihrer Ableitung auf der Bodenwand bzw. in der dort ausgebildeten wenigstens einen Sammelrinne dauert es relativ lange, bis die Pressmolke der weiteren Verarbeitung zugeführt werden kann. In dieser Zeit werden Inhaltsstoffe der Pressmolke, wie vorstehend bereits thematisiert, durch Mikroorganismen fermentiert, was zu einer abnehmenden Qualität der Pressmolke führt. Je länger die Pressmolke unterwegs ist, umso weiter sinkt ihre Qualität. Dies äußert sich z.B. durch einen Anstieg der Gesamtkeimzahl und durch einen sinkenden pH- Wert, der aus der Fermentation des in der Pressmolke enthaltenen Milchzuckers resultiert.

Es ist Aufgabe der vorliegenden Erfindung, ein Verfahren und eine Anlage zur forcierten Ableitung von Pressmolke aus einer Käsepresse bereitzustellen, wodurch die Qualität der an der Käsepresse anfallenden Pressmolke für die nachfolgenden Prozesse positiv beeinflusst wird.

### ZUSAMMENFASSUNG DER ERFINDUNG

Diese Aufgabe wird durch ein Verfahren mit den Merkmalen des unabhängigen Anspruchs 1 gelöst. Vorteilhafte Ausgestaltungen des Verfahrens sind Gegenstand der Unteransprüche. Eine Anlage, die geeignet ist zur Durchführung des erfindungsgemäßen Verfahrens, ist Gegenstand des unabhängigen Anspruchs 5. Vorteilhafte Ausgestaltungen der Anlage sind Gegenstand der zugeordneten Unteransprüche.

Das erfindungsgemäße Verfahren geht von einem bekannten verfahrensmäßigen Betrieb einer Käsepresse aus, die für das Pressen von Käse in einer Mehrzahl von Käseformen mit beweglichen Deckeln derart ausgerüstet ist, dass über die Deckel Druck auf den Käse ausübbar ist. Dabei sind die Käseformen mindestens in einer Pressreihe angeordnet, sie werden über einen Eintritt in die jeweilige Pressreihe ein- und über einen Austritt aus der Pressreihe ausgebracht und von dem Eintritt zu dem Austritt intermittierend gefördert. In der stationären Position der Käseformen in der Pressreihe erfolgt das Pressen des Käses. Die aus den Käseformen einer Pressreihe austretende Pressmolke wird aufgefangen und gesammelt, zu einem Ende der Pressreihe abgeleitet und anschließend aus der Käsepresse abgeführt.

Der der Erfindung zugrunde liegende verfahrenstechnische Lösungsgedanke besteht darin, dass der zu dem Ende der Pressreihe ablaufenden Tropf- und/oder Pressmolke von dem anderen Ende der Pressreihe eine Spülflüssigkeit bedarfsweise zugeführt wird. Durch diese ebenso einfache wie wirksame Maßnahme wird die über relativ lange Zeit anfallende und über die Presszeit mengenmäßig stetig abnehmende Tropf- und/oder Pressmolke immer dann, wenn dies angezeigt ist, durch die Spülflüssigkeit schneller zum Auslauf aus der Käsepresse gefördert und dem weiteren Verarbeitungsprozess ohne Qualitätsminderung zugeführt, als dies der Tropf- und/oder Pressmolke allein und lediglich unter dem Einfluss der Schwerkraft auf der mit relativ geringer Neigung ausgestatteten Bodenwand möglich wäre.

Die Zufuhr der Spülflüssigkeit erfolgt nach einer vorteilhaften Ausgestaltung des Verfahrens zeitweise, d.h. intermittierend bzw. impulsweise. Dabei sind die Intensität der Spülung, d.h. die Menge der jeweils zugeführten Spülflüssigkeit, die Häufigkeit der Spülimpulse über die Handhabungs- und Presszeit des Käses in der Käsepresse gesehen und die Zeitdauer des jeweiligen Spülimpulses variabel einstellbar.

Grundsätzlich kann die Zufuhr der Spülflüssigkeit am Eintritt oder im Bereich des Eintritts der Käseformen in die Käsepresse oder am Austritt oder im Bereich des Austritts der Käseformen aus der Käsepresse erfolgen. Eine weitere vorteilhafte Ausgestaltung des Verfahrens sieht diesbezüglich vor, dass die Zufuhr der Spülflüssigkeit am Austritt aus der Pressreihe erfolgt. Diese Maßnahme zeigt die beste Wirkung, da am Austritt oder im Bereich des Austritts die geringeren Pressmolkemengen anfallen, die bei einer Abfuhr der Pressmolke in Richtung des Eintritts am längsten unterwegs sind.

Als Spülflüssigkeit ist erfindungsgemäß hygienisch einwandfreies Frischwasser oder eine andere hygienische Flüssigkeit vorgesehen. Weiterhin ist vorgesehen, dass die Temperatur der Spülflüssigkeit so eingestellt ist, dass sie unterhalb der Temperatur der anfallenden Tropf- und/oder Pressmolke liegt. Dadurch wird im Zuge des Mischvorganges zwischen Spülflüssigkeit und Pressmolke die Temperatur des Gemischs und damit der darin enthaltenen Pressmolkeanteile abgesenkt, wodurch eine Verlangsamung möglicher Fermentationsprozesse in der Pressmolke eintritt.

Eine erfindungsgemäße Anlage, die zur Durchführung des erfindungsgemäßen Verfahrens geeignet ist, geht aus von einer bekannten Käsepresse für das Pressen von Käse in einer Mehrzahl von Käseformen mit beweglichen Deckeln, über die mit von Druckzylindern betätigbaren Druckelementen Druck auf den Käse ausübbar ist. Dabei sind Käseformen in mindestens einer Pressreihe angeordnet, sie werden über einen Eintritt in die jeweilige Pressreihe ein- und über einen Austritt aus der Pressreihe ausgebracht und von dem Eintritt zu dem Austritt mittels eines Transportmittels intermittierend gefördert. In der stationären Position der Käseformen in der Pressreihe erfolgt das Pressen des Käses. Die aus den Käseformen einer Pressreihe austretende Tropf- und/oder Pressmolke wird auf einer Bodenwand der Käsepresse aufgefangen und gesammelt, dort zu einem Ende der Pressreihe abgeleitet und anschließend über einen an diesem Ende der Pressreihe und an der Bodenwand angeordneten Abfuhranschluss aus der Käsepresse abgeführt. Bei der Käsepresse kann es sich um eine langgestreckte, offene Rahmenkonstruktion oder um eine langgestreckte, tunnelförmige Bauform handeln, die zu den Druckzylindern hin offen oder insgesamt geschlossen und ggf. evakuierbar ist.

Der der Erfindung zugrunde liegende vorrichtungstechnische Lösungsgedanke besteht darin, dass an dem dem Abfuhranschluss gegenüberliegenden Ende der jeweiligen Pressreihe an die zugeordnete Bodenwand eine Spülleitung für Spülflüssigkeit, vorgesehen als hygienisch einwandfreies Frischwasser oder eine andere hygienische Flüssigkeit, angeschlossen ist.

Eine erfindungsgemäße Anlage, die zur Durchführung des erfindungsgemäßen Verfahrens geeignet ist, geht aus von einer bekannten Käsepresse für das Pressen von Käse in einer Mehrzahl von Käseformen mit beweglichen Deckeln, über die mit von Druckzylindern betätigbaren Druckelementen Druck auf den Käse ausübbar ist. Dabei sind Käseformen in mindestens einer Pressreihe angeordnet, sie werden über einen Eintritt in die jeweilige Pressreihe ein- und über einen Austritt aus der Pressreihe ausgebracht und von dem Eintritt zu dem Austritt mittels eines Transportmittels intermittierend gefördert. In der stationären Position der Käseformen in der Pressreihe erfolgt das Pressen des Käses. Die im Betrieb der Käsepresse aus den Käseformen einer Pressreihe austretende Tropf- und/oder Pressmolke wird auf einer Bodenwand der Käsepresse aufgefangen und gesammelt, dort zu einem Ende der Pressreihe abgeleitet und anschließend über einen an diesem Ende der Pressreihe und an der Bodenwand angeordneten Abfuhranschluss aus der Käsepresse abgeführt. Bei der Käsepresse kann es sich um eine langgestreckte, offene Rahmenkonstruktion oder um eine langgestreckte, tunnelförmige Bauform handeln, die zu den Druckzylindern hin offen oder insgesamt geschlossen und ggf. evakuierbar ist.

Der der Erfindung zugrunde liegende vorrichtungstechnische Lösungsgedanke besteht darin, dass an dem dem Abfuhranschluss gegenüberliegenden Ende der jeweiligen Pressreihe an die zugeordnete Bodenwand eine Spülleitung für Spülflüssigkeit angeschlossen ist.

Eine vorteilhafte Ausgestaltung der erfindungsgemäßen Anlage sieht vor, dass die jeweilige Spülleitung an wenigstens eine zugeordnete Sammelrinne angeschlossen ist, die in der Bodenwand ausgebildet ist und sich entlang der Pressreihe erstreckt. Die an sich bekannte Sammelrinne schafft einerseits ebenfalls an sich bekannte bessere Sammel- und Abflussbedingungen für relativ kleine Mengen an Pressmolke, sie wirkt sich andererseits aber auch gleichermaßen günstig auf die Ausspülbedingungen für die Pressmolke durch die Spülflüssigkeit aus.

Um die vorstehend im Zusammenhang mit der Ausgestaltung des erfindungsgemäßen Verfahrens beschriebenen Vorteile sicherzustellen, sieht eine vorteilhafte Ausführungsform der Anlage vor, dass die Spülleitung am Austritt oder im Bereich des Austritts aus der Pressreihe angeschlossen ist. Weiterhin ist vorgesehen, dass die Spülleitung jeder Pressreihe aus einer gemeinsamen Spülleitung ausmündet, wodurch sich der Verrohrungsaufwand reduziert. Nach einem weiteren Vorschlag ist die Spülleitung jeder Pressreihe über ein zugeordnetes Ventil separat schaltbar. Eine andere Ausgestaltung sieht vor, dass alle Spülleitungen über ein in der gemeinsamen Spülleitung angeordnetes Ventil gemeinsam schaltbar sind.

Herkömmliche Käsepressen sind mit den vorgeschlagenen anlagentechnischen Merkmalen leicht nachzurüsten, sodass auch für diese Käsepressen die Vorteile des erfindungsgemäßen Verfahrens zur Verfügung stehen.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen des Verfahrens und der Anlage zu dessen Durchführung realisiert ist, ist in der Zeichnung anhand von zwei sich in ihrem äußeren konstruktiven Aufbau unterscheidenden Käsepressen jeweils eine bevorzugte erfindungsgemäße Anlage dargestellt, wobei sich eine Lösung auf eine einzige Pressreihe und eine weitere Lösung auf vier parallele Pressreihen bezieht. Die Anlage mit den beiden vorgenannten Lösungen ist nachfolgend nach Aufbau und Funktion beschrieben. Es zeigen
- **Figur 1**: in schematischer Darstellung eine Käsepresse der in Rede stehenden Art in einer ersten konstruktiven Ausführung, wobei die erfindungsgemäßen Merkmale verwirklicht sind;
- **Figur 2**: ebenfalls in schematischer Darstellung eine Käsepresse der in Rede stehenden Art in einer zweiten konstruktiven Ausführung, wobei die erfindungsgemäßen Merkmale in gleicher Weise verwirklicht sind;
- **Figur 3**: einen Querschnitt durch die Käsepresse entsprechend einem in Figur 2 mit **C-D** gekennzeichneten Schnittverlauf zur Darstellung der erfindungsgemäßen Merkmale an einer einzigen Pressreihe und
- **Figur 4**: einen Querschnitt durch die Käsepresse entsprechend einem in Figur 2 mit **C-D** gekennzeichneten Schnittverlauf zur Darstellung der erfindungsgemäßen Merkmale an vier parallelen Pressreihen.

### DETAILLIERTE BESCHREIBUNG

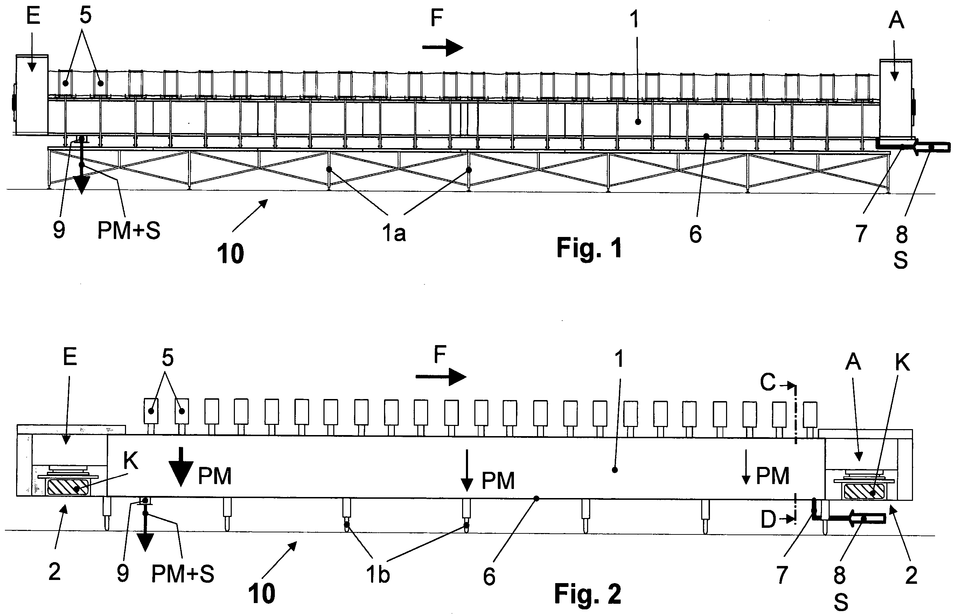

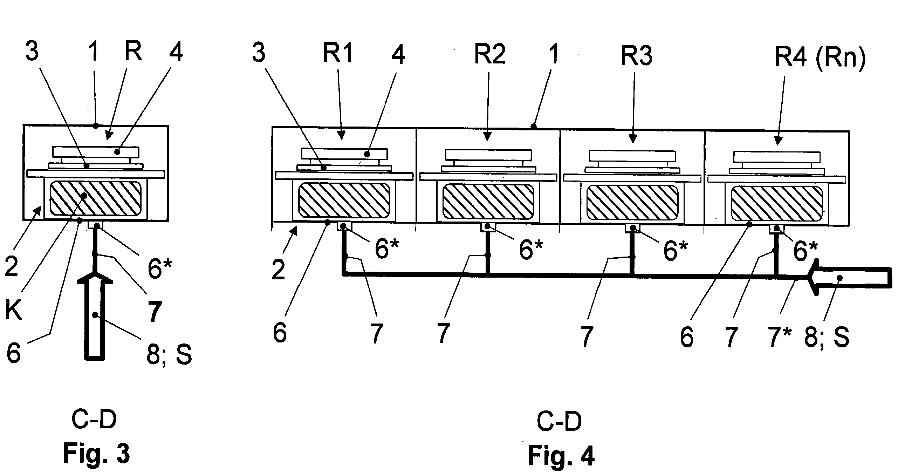

Die **Figuren 1** bis **4** zeigen zwei in Teilen konstruktiv unterschiedliche Anlagen zur Durchführung des erfindungsgemäßen Verfahrens mit einer Käsepresse 10 für das Pressen von Käse K in einer Mehrzahl von Käseformen 2 (dargestellt in **Figur 2****)** mit beweglichen Deckeln 3 (**Figuren 3** und **4**), über die mit von Druckzylindern 5 betätigbaren Druckelementen 4 Druck auf den Käse K ausübbar ist. Bei der Käsepresse 10 kann es sich um eine langgestreckte, offene Rahmenkonstruktion oder, wie in den **Figuren 1** und **2** dargestellt, um eine langgestreckte, rinnen- oder tunnelförmige Bauform handeln, die von Wandungen begrenzt ist. Bei der tunnelförmigen Bauform weist ein Tunnel 1 eine Tunnelkammer auf, die von einer Bodenwand 6, einer nicht bezeichneten Deckenwand und von ebenfalls nicht bezeichneten Seitenwänden gebildet ist. Bei der rinnenförmigen Bauform fehlt die Deckenwandung. Die insgesamt geschlossene Tunnelkammer ist ggf. evakuierbar. Der Tunnel 1 ruht auf einem Gestell 1a **(****Figur 1****)** oder auf Füßen 1b **(****Figur 2****).**

Die Mehrzahl von Käseformen 2 ist nebeneinander in mindestens einer Pressreihe R (**Figuren 3****,** **1, 2**) oder, im allgemeinsten Falle, in mehreren parallel angeordneten Pressreihen R1 bis Rn angeordnet (**Figur 4****).** Im Ausführungsbeispiel gemäß **Figur 4** handelt es sich um vier Pressreihen R1 bis R4. Die Käseformen 2 werden über einen Eintritt E in die jeweilige Pressreihe R bzw. R1 bis R4 ein- und über einen Austritt A aus der jeweiligen Pressreihe R bzw. R1 bis R4 ausgebracht und von dem Eintritt E zunächst in die stationäre Pressposition und anschließend zu dem Austritt A mittels eines nicht dargestellten und bezeichneten Transportmittels in einer Förderrichtung F intermittierend gefördert.

Die vorzugsweise mit pneumatischem oder hydraulischem Druckmittel beaufschlagbaren Druckzylinder 5 sind entsprechend der Anzahl der Käseformen 2 in jeder Pressreihe R bzw. R1 bis R4 oberhalb des Tunnels 1 angeordnet und in der stationären Position der Käseformen 2 in der Pressreihe R bzw. R1 bis R4 jeweils einer Käseform 2 zugeordnet. Eine beim Pressen des Käses K aus den Käseformen 2 einer Pressreihe R bzw. R1 bis R4 austretende Pressmolke PM wird auf der Bodenwand 6 der Käsepresse 10 aufgefangen und gesammelt, dort zu einem Ende der Pressreihe R bzw. R1 bis R4 abgeleitet und anschließend über einen an diesem Ende der Pressreihe R bzw. R1 bis R4 und an der zugeordneten Bodenwand 6 angeordneten Abfuhranschluss 9 aus der Käsepresse 10 abgeführt. Der Anfall von Tropf- und Pressmolke PM nimmt, wie **Figur 2** schematisch und vereinfacht zeigt, vom Eintritt E in die Pressreihe R bzw. in die jeweilige Pressreihe R1 bis Rn bis zum Austritt aus dieser ab.

An dem dem Abfuhranschluss 9 gegenüberliegenden Ende der jeweiligen Pressreihe R bzw. R1 bis Rn ist an die zugeordnete Bodenwand 6 eine Spülleitung 7 angeschlossen, der über einen Zufuhranschluss 8 eine Spülflüssigkeit S, vorzugsweise hygienisches Frischwasser oder eine andere hygienische Flüssigkeit, bedarfsweise zugeführt wird (**Figuren 1** bis **4**). Im Ausführungsbeispiel ist die Spülleitung 7 am Austritt A oder im Bereich des Austritts A aus der Pressreihe R bzw. R1 bis Rn angeschlossen. Beim Spülen mit der Spülflüssigkeit S wird die sich auf der Bodenwand 6 sammelnde Pressmolke PM mit der Spülflüssigkeit S vermischt und mit dieser als Gemisch PM+S zum Abfuhranschluss 9 ausgeschwemmt.

Die jeweilige Spülleitung 7 ist gemäß einer vorteilhaften Ausführungsform an wenigstens eine zugeordnete Sammelrinne 6* angeschlossen, die in der Bodenwand 6 ausgebildet ist und sich entlang der Pressreihe R **(****Figur 3****)** bzw. der jeweiligen R1 bis R4 erstreckt **(****Figur 4****).** Dabei mündet die Spülleitung 7 jeder Pressreihe R1 bis R4 aus einer gemeinsamen Spülleitung 7* aus. Nach einer ersten Ausgestaltung ist jede Spülleitung 7 über ein zugeordnetes, nicht dargestelltes und bezeichnetes Ventil, vorzugsweise ein Absperrventil, separat schaltbar. Eine zweite Ausgestaltung sieht vor, dass alle Spülleitungen 7 über ein in der gemeinsamen Spülleitung 7* angeordnetes, nicht dargestelltes und bezeichnetes Ventil, ebenfalls vorzugsweise ein Absperrventil, gemeinsam schaltbar sind.

### BEZUGSZEICHENLISTE DER VERWENDETEN ABKÜRZUNGEN

- 10: Käsepresse

- 1: Tunnel
- 1a: Gestell
- 1b: Fuß

- 2: Käseform
- 3: Deckel
- 4: Druckelement
- 5: Druckzylinder

- 6: Bodenwand
- 6*: Sammelrinne

- 7: Spülleitung
- 7*: gemeinsame Spülleitung

- 8: Zufuhranschluss
- 9: Abfuhranschluss

- A: Austritt (aus der Pressreihe)
- E: Eintritt (in die Pressreihe)
- F: Förderrichtung
- K: Käse
- PM: Tropf- und/oder Pressmolke

- R: Pressreihe
- R1 bis R4: erste bis vierte Pressreihe
- Rn: n-te Pressreihe

- S: Spülflüssigkeit

## Patentansprüche

1. Verfahren zur forcierten Ableitung von Tropf- und/oder Pressmolke (PM) aus einer Käsepresse (10), die für das Pressen von Käse (K) in einer Mehrzahl von Käse-formen (2) mit beweglichen Deckeln (3) derart ausgerüstet ist, dass über die Deckel (3) Druck auf den Käse (K) ausübbar ist, wobei die Käseformen (2) mindestens in einer Pressreihe (R) angeordnet sind, die Käseformen (2) über einen Eintritt (E) in die jeweilige Pressreihe (R) ein- und über einen Austritt (A) aus der Pressreihe (R) ausgebracht und von dem Eintritt (E) zu dem Austritt (A) intermittierend gefördert werden, wobei in der stationären Position der Käseformen (2) in der Pressreihe (R) das Pressen des Käses (K) erfolgt und wobei die aus den Käseformen (2) einer Pressreihe (R) austretende Tropf- und/oder Pressmolke (PM) auf einer Bodenwand (6) der Käsepresse (10) aufgefangen und gesammelt, zu einem Ende der Pressreihe (R) abgeleitet und anschließend aus der Käsepresse (10) abgeführt wird,
**dadurch gekennzeichnet,**
**dass** der zu dem Ende der Pressreihe (R) ablaufenden Tropf- und/oder Pressmolke (PM) von dem anderen Ende der Pressreihe (R) immer dann, wenn dies angezeigt ist, eine Spülflüssigkeit (S), vorgesehen als hygienisch einwandfreies Frischwasser oder eine andere hygienische Flüssigkeit, bedarfsweise zugeführt wird, wodurch die Tropf- und/oder Pressmolke (PM) schneller zum Auslauf aus der Käsepresse (10) gefördert und dem weiteren Verarbeitungsprozess ohne Qualitätsminderung zugeführt wird.

2. Verfahren nach Anspruch 1,
**dadurch gekennzeichnet,**
**dass** die Zufuhr der Spülflüssigkeit (S) zeitweise erfolgt und hinsichtlich Intensität und/oder Häufigkeit und/oder Zeitdauer variabel ist.

3. Verfahren nach Anspruch 1 oder 2,
**dadurch gekennzeichnet,**
**dass** die Zufuhr der Spülflüssigkeit (S) am Austritt (A) oder im Bereich des Austritts (A) aus der Pressreihe (R) erfolgt.

4. Verfahren nach einem der vorhergehenden Ansprüche,
**dadurch gekennzeichnet,**
**dass** die Temperatur der Spülflüssigkeit (S) unterhalb der Temperatur der anfallenden Tropf- und/oder Pressmolke (PM) liegt.

5. Anlage geeignet zur Durchführung des Verfahrens nach einem der Ansprüche 1 bis 4,
mit einer Käsepresse (10) für das Pressen von Käse (K) in einer Mehrzahl von Käseformen (2) mit beweglichen Deckeln (3), über die mit von Druckzylindern (5) betätigbaren Druckelementen (4) Druck auf den Käse (K) ausübbar ist, wobei die Käseformen (2) mindestens in einer Pressreihe (R; R1 bis Rn) angeordnet sind, die Käseformen (2) über einen Eintritt (E) in die jeweilige Pressreihe (R) ein- und über einen Austritt (A) aus der Pressreihe (R) ausgebracht und von dem Eintritt (E) zu dem Austritt (A) mittels eines Transportmittels intermittierend gefördert werden, wobei in der stationären Position der Käseformen (2) in der Pressreihe (R) das Pressen des Käses (K) erfolgt und wobei eine aus den Käseformen (2) einer Pressreihe (R) austretende Tropf- und/oder Pressmolke (PM) auf einer Bodenwand (6) der Käsepresse (10) aufgefangen und gesammelt, dort zu einem Ende der Pressreihe (R) abgeleitet und anschließend über einen an diesem Ende der Pressreihe (R) und an der Bodenwand (6) angeordneten Abfuhranschluss (9) aus der Käsepresse (10) abgeführt wird,
**dadurch gekennzeichnet,**
**dass** an dem dem Abfuhranschluss (9) gegenüberliegenden Ende der jeweiligen Pressreihe (R; R1 bis Rn) an die zugeordnete Bodenwand (6) eine Spülleitung (7) für Spülflüssigkeit (S), vorgesehen als hygienisch einwandfreies Frischwasser oder eine andere hygienische Flüssigkeit, angeschlossen ist.

6. Anlage nach Anspruch 5,
**dadurch gekennzeichnet,**
**dass** die jeweilige Spülleitung (7) an wenigstens eine zugeordnete Sammelrinne (6*) angeschlossen ist, die in der Bodenwand (6) ausgebildet ist und sich entlang der Pressreihe (R; R1 bis Rn) erstreckt.

7. Anlage nach Anspruch 5 oder 6,
**dadurch gekennzeichnet,**
**dass** die Spülleitung (7) am Austritt (A) oder im Bereich des Austritts (A) aus der Pressreihe (R; R1 bis Rn) angeschlossen ist.

8. Anlage nach einem der Ansprüche 5 bis 7,
**dadurch gekennzeichnet,**
**dass** die Spülleitung (7) jeder Pressreihe (R1 bis Rn) aus einer gemeinsamen Spülleitung (7*) ausmündet.

9. Anlage nach Anspruch 8,
**dadurch gekennzeichnet,**
**dass** jede Spülleitung (7) über ein zugeordnetes Ventil separat schaltbar ist

10. Anlage nach Anspruch 8,
**dadurch gekennzeichnet,**
**dass** alle Spülleitungen (7) über ein in der gemeinsamen Spülleitung (7*) angeordnetes Ventil gemeinsam schaltbar sind.

## Claims

1. A method for forcibly draining drip and/or press whey (PM) from a cheese press (10), which is equipped with movable covers (3) for pressing cheese (K) in a plurality of cheese molds (2) such that pressure can be exerted on the cheese (K) via the covers (3), wherein the cheese molds (2) are arranged in at least one pressing row (R), the cheese molds (2) are introduced into the relevant pressing row (R) via an entrance (E) and discharged from the pressing row (R) via an exit (A) and are intermittently conveyed from the entrance (E) to the exit (A), wherein the cheese (K) is pressed in the stationary position of the cheese molds (2) in the pressing row (R) and wherein the drip and/or press whey (PM) that comes out of the cheese molds (2) of a pressing row (R) is captured and collected on a base wall (6) of the cheese press (10), guided away to one end of the pressing row (R) and subsequently discharged from the cheese press (10),
**characterized in that**
a flushing liquid (S) provided as hygienically innocuous fresh water or another hygienic liquid is supplied, as needed and whenever appropriate, to the drip and/or press whey (PM) flowing away to the end of the pressing row (R), from the other end of the pressing row (R), as a result of which the drip and/or press whey (PM) is conveyed more quickly to the outlet of the cheese press (10) and supplied for the further processing procedure without a deterioration in quality.

2. The method according to claim 1,
**characterized in that**
the supply of the flushing liquid (S) takes place periodically and is variable with regard to intensity and/or frequency and/or duration.

3. The method according to claim 1 or 2,
**characterized in that**
the supply of the flushing liquid (S) takes place at the exit (A) or in the region of the exit (A) of the pressing row (R).

4. The method according to any one of the preceding claims,
**characterized in that**
the temperature of the flushing liquid (S) is below the temperature of the drip and/or press whey (PM) being produced.

5. An apparatus suitable for carrying out the method according to any one of claims 1 to 4,
comprising a cheese press (10) for pressing cheese (K) in a plurality of cheese molds (2) having movable covers (3), via which pressure can be exerted on the cheese (K) by means of pressure elements (4) that can be actuated by pressure cylinders (5), wherein the cheese molds (2) are arranged in at least one pressing row (R; R1 to Rn), the cheese molds (2) are introduced into the relevant pressing row (R) via an entrance (E) and discharged from the pressing row (R) via an exit (A) and are intermittently conveyed from the entrance (E) to the exit (A) by means of a transport means, wherein the cheese (K) is pressed in the stationary position of the cheese molds (2) in the pressing row (R) and wherein drip and/or press whey (PM) that comes out of the cheese molds (2) of a pressing row (R) is captured and collected on a base wall (6) of the cheese press (10), from there guided away to one end of the pressing row (R) and subsequently discharged from the cheese press (10) via a discharge port (9) arranged on said end of the pressing row (R) and on the base wall (6),
**characterized in that**
a flushing line (7) for flushing liquid (S), provided as hygienically innocuous fresh water or another hygienic liquid, is connected to the assigned base wall (6) on the end of the relevant pressing row (R; R1 to Rn) that is opposite the discharge port (9).

6. The apparatus according to claim 5,
**characterized in that**
the relevant flushing line (7) is connected to at least one assigned collection channel (6*), which is formed in the base wall (6) and extends along the pressing row (R; R1 to Rn).

7. The apparatus according to claim 5 or 6,
**characterized in that**
the flushing line (7) is connected to the exit (A) or in the region of the exit (A) of the pressing row (R; R1 to Rn).

8. The apparatus according to any one of claims 5 to 7,
**characterized in that**
the flushing line (7) of each pressing row (R1 to Rn) leads out from a common flushing line (7*).

9. The apparatus according to claim 8,
**characterized in that**
each flushing line (7) can be switched separately by means of an assigned valve.

10. The apparatus according to claim 8,
**characterized in that**
all flushing lines (7) can be switched together by means of a valve arranged in the common flushing line (7*).

## Revendications

1. Procédé pour l'évacuation forcée de petit lait d'égouttage et/ou de pressage (PM) à partir d'une presse à fromage (10) équipée de couvercles mobiles (3) pour le pressage de fromage (K) dans une pluralité de moules à fromage (2), de sorte qu'une pression peut être exercée sur le fromage (K) par le biais des couvercles (3), dans lequel les moules à fromage (2) sont disposés dans au moins une rangée de presse (R), les moules à fromage (2) sont introduits dans la rangée de presse (R) respective par une entrée (E) et évacués de la rangée de presse (R) par une sortie (A) et transportés de l'entrée (E) vers la sortie (A) par intermittence, dans lequel le pressage du fromage (K) est réalisé dans la position stationnaire des moules à fromage (2) dans la rangée de presse (R) et dans lequel le petit lait d'égouttage et/ou de pressage (PM) sortant des moules à fromage (2) d'une rangée de presse (R) est récupéré et collecté sur une paroi de fond (6) de la presse à fromage (10), guidé vers une extrémité de la rangée de presse (R) puis évacué hors de la presse à fromage (10),
**caractérisé en ce que**
un liquide de rinçage (S), prévu sous la forme d'eau fraîche parfaitement hygiénique ou d'un autre liquide hygiénique, est ajouté en cas de besoin au petit lait d'égouttage et/ou de pressage (PM) sortant à l'extrémité de la rangée de presse (R), le cas échéant, depuis l'autre extrémité de la rangée de presse (R), moyennant quoi le petit lait d'égouttage et/ou de pressage (PM) est transporté plus rapidement vers la sortie hors de la presse à fromage (10) et amené vers le processus de traitement consécutif sans dégradation.

2. Procédé selon la revendication 1,
**caractérisé en ce que**
l'ajout du liquide de rinçage (S) est réalisé temporairement et peut varier en intensité et/ou en fréquence et/ou en durée.

3. Procédé selon la revendication 1 ou 2,
**caractérisé en ce que**
l'ajout du liquide de rinçage (S) est réalisé à la sortie (A) ou dans la région de la sortie (A) hors de la rangée de presse (R).

4. Procédé selon l'une des revendications précédentes,
**caractérisé en ce que**
la température du liquide de rinçage (S) est inférieure à la température du petit lait d'égouttage et/ou de pressage (PM) récupéré.

5. Dispositif adapté pour la mise en œuvre du procédé selon l'une des revendications 1 à 4,
comprenant une presse à fromage (10) pour le pressage de fromage (K) dans une pluralité de moules à fromage (2) avec des couvercles mobiles (3), par le biais desquels une pression peut être exercée sur le fromage (K) à l'aide d'éléments de pression (4) actionnables par des cylindres de pression (5), dans lequel les moules à fromage (2) sont disposés dans au moins une rangée de presse (R ; R1 à Rn), les moules à fromage (2) sont introduits dans la rangée de presse (R) respective par une entrée (E) et évacués de la rangée de presse (R) par une sortie (A) et transportés par intermittence de l'entrée (E) vers la sortie (A) à l'aide d'un moyen de transport, dans lequel le pressage du fromage (K) est réalisé dans la position stationnaire des moules à fromage (2) dans la rangée de presse (R) et dans lequel un petit lait d'égouttage et/ou de pressage (PM) sortant des moules à fromage (2) d'une rangée de presse (R) est récupéré et collecté sur une paroi de fond (6) de la presse à fromage (10), où il est guidé vers une extrémité de la rangée de presse (R) puis évacué hors de la presse à fromage (10) par le biais d'un raccord d'évacuation (9) disposé à cette extrémité de la rangée de presse (R) et au niveau de la paroi de fond (6),
**caractérisé en ce que**
à l'extrémité de la rangée de presse (R ; R1 à Rn) respective opposée au raccord d'évacuation (9), une conduite de rinçage (7) pour un liquide de rinçage (S) prévu sous la forme d'eau fraîche parfaitement hygiénique ou d'un autre liquide hygiénique est raccordée à la paroi de fond (6) correspondante.

6. Dispositif selon la revendication 5,
**caractérisé en ce que**
la conduite de rinçage (7) respective est raccordée à au moins une rigole collectrice (6*) correspondante, laquelle est formée dans la paroi de fond (6) et s'étend le long de la rangée de presse (R ; R1 à Rn).

7. Dispositif selon la revendication 5 ou 6,
**caractérisé en ce que**
la conduite de rinçage (7) est raccordée à la sortie (A) ou dans la région de la sortie (A) hors de la rangée de presse (R ; R1 à Rn).

8. Dispositif selon l'une des revendications 5 à 7,
**caractérisé en ce que**
la conduite de rinçage (7) de chaque rangée de presse (R1 à Rn) débouche d'une conduite de rinçage commune (7*).

9. Dispositif selon la revendication 8,
**caractérisé en ce que**
chaque conduite de rinçage (7) peut être commutée séparément par le biais d'une soupape correspondante.

10. Dispositif selon la revendication 8,
**caractérisé en ce que**
toutes les conduites de rinçage (7) peuvent être commutées conjointement par le biais d'une soupape disposée dans la conduite de rinçage commune (7*).
